# EUROPÄISCHE PATENTSCHRIFT

(11) **EP 3 361 620 B1**
(45) Veröffentlichungstag und Bekanntmachung des Hinweises auf die Patenterteilung: **08.02.2023**
(21) Anmeldenummer: 17207482.5
(22) Anmeldetag: 14.12.2017
(51) Int. Cl.: H02P 3/12, E05F 15/603, H02P 29/024, E05F 15/72

(54) **BREMSVORRICHTUNG**
BRAKING DEVICE
DISPOSITIF DE FREINAGE

(30) Priorität: 08.02.2017 DE 102017201950
(43) Veröffentlichungstag der Anmeldung: 15.08.2018
(73) Patentinhaber: GEZE GmbH, 71229 Leonberg (DE)
(72) Erfinder: Hucker, Dr., Matthias, 76359 Marxzell (DE)

(56) Entgegenhaltungen:
- WO-A1-2016/113031
- DE-A1-102007 062 515
- US-A1- 2006 125 436
- US-B1- 6 175 204
- US-B1- 6 194 856
- US-B2- 7 479 756

## Beschreibung

Die vorliegende Erfindung betrifft eine Bremsvorrichtung für einen beweglichen Türflügel.

Aus dem Stand der Technik sind Türschließer für bewegliche Türflügel mit einem mechanischen Energiespeicher und einer Bremsvorrichtung bekannt. Beim Öffnen des Türflügels wird der mechanische Energiespeicher mit potentieller Energie aufgeladen, welche den losgelassenen Türflügel wieder schließt. Der mechanische Energiespeicher ist beispielsweise als Feder ausgeführt, welche durch das Öffnen des Türflügels gespannt wird. Danach schließt die potentielle Energie in der Feder den Türflügel. Das Schließmoment des Türflügels ist dabei durch die aktuelle Federspannung und die verschiedenen Übersetzungen im System bestimmt. Die Schließgeschwindigkeit selbst wird in der Bremsvorrichtung beispielsweise durch Öl in einem Dämpfer gedämpft. Durch verschiedene hydraulische Ventile und deren Einstellung kann das gewünschte Schließverhalten des Türflügels eingestellt werden. Dies ermöglicht eine kostengünstige und autarke Implementierung des Türschließers, d.h. der Türschließer funktioniert ohne Zuführung von externer Energie.

Allerdings ist die Schließgeschwindigkeit des Türflügels mit Ventilen nur in Grenzen einstellbar. So hat beispielsweise eine Endschlagfunktion immer denselben Einsatzpunkt, da nur der Durchfluss, aber nicht die Position des Ventils einstellbar ist. Des Weiteren können Funktionen, welche von der aktuellen Geschwindigkeit des Türflügels abhängen, nur aufwändig realisiert werden. Auch gestaltet sich die Regelung der Schließgeschwindigkeit, beispielsweise auf eine gewünschte Schließzeit des Türflügels, schwierig. Durch Probieren müssen die Ventile entsprechend eingestellt werden. Ändern sich dann die Temperatur des Dämpferöls oder die Reibungsverhältnisse im Türschließer, so ändert sich auch die Schließzeit. Zudem kann es durch austretendes Dämpferöl zu Verschmutzungen der Umwelt kommen, falls der Türschließer undicht wird, und das Dämpferöl muss dann entsorgt werden. Außerdem ist das Dämpferöl in der Regel brennbar, was zur Ausbreitung eines Brandes beitragen kann, wenn es im Brandfall austritt und sich entzündet.

Um solche Nachteile zu vermeiden, kann die Bremsvorrichtung einen als Generator betriebenen Elektromotor, dessen Motorwelle durch eine Bewegung des Türflügels drehbar ist und an dessen Motorklemmen eine bewegungsabhängige Motorspannung entsteht, sowie einen Bremsstromkreis umfassen, an den die Motorspannung angelegt oder anlegbar ist und über den die Motorklemmen kurzschließbar sind, um eine Bewegung des Türflügels zu dämpfen. Die Dämpfung erfolgt dabei also nicht dadurch, dass ein Dämpferöl durch Ventile gedrängt wird, sondern dadurch, dass der als Generator betriebene Elektromotor elektrische Energie erzeugt, die durch das Kurzschließen verbraucht wird. Eine derartige Bremsvorrichtung kann auch bei einem nicht elektrisch betriebenen Türschließer vorgesehen sein, da für den Betrieb der Bremsvorrichtung grundsätzlich keine Stromquelle erforderlich ist. Somit ermöglicht auch eine Bremsvorrichtung mit generatorisch betriebenem, kurzschließbarem Elektromotor eine autarke Implementierung des Türschließers. Je nach Ausführung kann die Bremsvorrichtung, insbesondere der genannte Bremsstromkreis, aber auch Schaltelemente aufweisen, zu deren Ansteuerung eine Stromversorgung erforderlich ist. Zudem kann die Bremsvorrichtung in einem elektrischen Türantrieb vorgesehen sein, wobei der Elektromotor dann neben seiner Funktion als Generator der Bremsvorrichtung zugleich auch als Motor des Türantriebs dienen kann, wofür er dann mit Strom versorgt werden muss.

Aus der DE 10 2005 028 007 B4 ist ein Türantrieb zum Betätigen eines beweglichen Türflügels mit einer solchen Bremsvorrichtung bekannt. Der Bremsstromkreis dieser Bremsvorrichtung weist ein als Feldeffekttransistor ausgeführtes Schaltelement auf, über welches die Motorklemmen des Elektromotors kurzschließbar sind. Im Bremsstromkreis ist eine Drain-Source-Strecke des Feldeffekttransistors angeordnet, und eine Spannung zwischen Gate und Source des Feldeffekttransistors wird über ein Potentiometer eingestellt, welches in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Somit wird der Feldeffekttransistor als spannungsabhängiger Lastwiderstand für den Elektromotor betrieben, so dass die Bremskraft der Bremsvorrichtung von der Ausgangsspannung des als Generator betriebenen Elektromotors abhängig ist und zudem über das Potentiometer einstellbar ist.

Eine ähnliche Bremsvorrichtung ist aus der DE 10 2015 200 284 B3 bekannt. Diese Bremsvorrichtung weist eine Auswerte- und Steuereinheit auf, die über ein Schaltelement im Bremsstromkreis eine Pulsweitenmodulation des Motorstroms durchführt und auf diese Weise eine wirksame Bremskraft zur Dämpfung der Bewegung des Türflügels einstellt. Auf diese Weise lässt sich das gewünschte Schließverhalten besonders flexibel einstellen. Denn die von der Auswerte- und Steuereinheit verursachte Pulsweitenmodulation des Motorstroms kann auf vielfältige Weise vorgebbar und insbesondere auch von über Sensoren erfassbaren Zuständen, z.B. der aktuellen Schließgeschwindigkeit oder der Winkelposition des Türflügels, abhängig sein, so dass auch eine Regelung der Schließgeschwindigkeit zur Erzielung eines gewünschten Schließverhaltens möglich wird.

Allerdings besteht grundsätzlich stets die Gefahr, dass eine derartige Dämpfung auch einmal ausfällt, d.h. dass der Bremsstromkreis eine Fehlfunktion aufweist, die dazu führt, dass die gewünschte Dämpfung nicht erfolgt. Infolgedessen könnte sich der Türflügel frei und ungedämpft oder kaum gedämpft bewegen. Ein solcher Ausfall kann etwa durch einen Bauteildefekt oder einen Leitungsbruch eintreten. Zudem ist es möglich, dass elektromagnetische Störungen die Dämpfung beeinträchtigen oder zu einem vollständigen Ausfall der Dämpfung führen. Ein Ausfall der Bremsvorrichtung könnte z.B. bei einer manuell zu betätigenden Drehflügeltür mit Türschließer dazu führen, dass der Türflügel nach einem manuellen Öffnen ungedämpft zuschlägt. Ein solches ungedämpftes Zuschlagen führt nicht nur zu Lärmbeeinträchtigung und zu erhöhtem Verschleiß, sondern kann auch einen Nutzer der Tür gefährden.

Eine Bremsvorrichtung nach dem Oberbegriff des Anspruchs 1 ist ferner aus US 6,175,204 B1 bekannt.

Es ist eine Aufgabe der Erfindung eine Bremsvorrichtung bereitzustellen, welche eine zuverlässige und ungefährliche sowie vorzugsweise flexibel einstellbare Dämpfung eines Türflügels ermöglicht und dabei eine verbesserte Sicherheit gegen einen Ausfall bietet.

Die Aufgabe wird gelöst durch eine Bremsvorrichtung mit den Merkmalen des Anspruchs 1. Vorteilhafte Ausführungsformen der Erfindung ergeben sich aus den Unteransprüchen, der vorliegenden Beschreibung sowie den Zeichnungen.

Die erfindungsgemäße Bremsvorrichtung umfasst zusätzlich zu dem Bremsstromkreis einen Notbremsstromkreis, an den die Motorspannung angelegt ist und über den die Motorklemmen kurzschließbar sind, um eine Bewegung des Türflügels zu dämpfen. Dabei handelt es sich bei dem Notbremsstromkreis insbesondere um einen von dem Bremsstromkreis separaten, weiteren Stromkreis. Durch diese Vorkehrung ergibt sich bereits eine vorteilhafte Redundanz bezüglich der Möglichkeit, eine Bewegung des Türflügels zu dämpfen. Denn die Dämpfung kann nun grundsätzlich sowohl einerseits über den Bremsstromkreis als auch andererseits über den Notbremsstromkreis erfolgen.

Darüber hinaus sind bei der erfindungsgemäßen Bremsvorrichtung Mittel vorgesehen, die dazu ausgebildet sind, das Vorliegen einer Fehlfunktion des Bremsstromkreises zu erfassen und die Motorklemmen bei Vorliegen einer Fehlfunktion des Bremsstromkreises über den Notbremsstromkreis kurzzuschließen. Mit anderen Worten können die Motorklemmen zwar sowohl über den Bremsstromkreis als auch über den Notbremsstromkreis kurzgeschlossen werden, das Kurzschließen über den Notbremsstromkreis wird aber, insbesondere nur, dann ausgelöst, wenn eine Fehlfunktion des Bremsstromkreises vorliegt.

Das ermöglicht es der Bremsvorrichtung, im Normalfall grundsätzlich entsprechend herkömmlichen Bremsvorrichtungen zu funktionieren. So kann im Normalfall, wenn also kein Ausfall und auch keine sonstige Fehlfunktion des Bremsstromkreises erfasst wurden, die Dämpfung in an sich bekannter Weise lediglich über den Bremsstromkreis erfolgen und insbesondere nicht über den Notbremsstromkreis. Das Vorliegen des Notbremsstromkreises hat dann bei normalem Betrieb keinen Einfluss auf die Bewegung des Türflügels. Wenn aber eine Fehlfunktion vorliegt, so dass die normale Dämpfung über den Bremsstromkreis vollständig ausfällt oder jedenfalls in erheblichem Maße beeinträchtigt ist, kann immer noch ein Kurzschluss über den Notbremsstromkreis erfolgen, der vorteilhafterweise automatisch durch die genannten Mittel ausgelöst wird.

Gemäß einer bevorzugten Ausführungsform sind die genannten Mittel dazu ausgebildet, die Motorklemmen bei Vorliegen einer Fehlfunktion des Bremsstromkreises über den Notbremsstromkreis kontinuierlich kurzzuschließen, um die Bewegung des Türflügels vorzugsweise konstant, insbesondere bis zum Stillstand des Türflügels, zu dämpfen.

Vorzugsweise erfolgt das Kurzschließen über den Notbremsstromkreis derart, dass der Türflügel so schnell wie möglich bis zum Stillstand abgebremst wird. In dieser Hinsicht kann sich der Notbremsstromkreis folglich in wesentlicher Weise von dem Bremsstromkreis unterscheiden. Denn der Bremsstromkreis ist vorteilhafterweise im Hinblick auf ein gewünschtes Schließverhalten - beispielsweise eine gewünschte Schließzeit und/oder einen gewünschten Schließverlauf, z.B. mit einem Endschlag oder unter Berücksichtigung einer gewünschten Schließfolge mehrerer Türflügel - ausgelegt und insbesondere flexibel einstellbar. Dagegen kann es für den Notbremsstromkreis, der ja vorzugsweise nur dann zur Anwendung kommt, wenn der Bremsstromkreis eine Fehlfunktion aufweist, ausreichen, wenn über ihn ein einfacher Kurzschluss bei zumindest im Wesentlichen konstantem Widerstand erfolgen kann. Um ein ungedämpftes Zuschlagen des Türflügels auch bei Ausfall des Bremsstromkreises zuverlässig zu verhindern, ist der Notbremsstromkreis dabei vorteilhafterweise für eine vergleichsweise starke Dämpfung ausgelegt, insbesondere indem ein niederohmiger Kurzschluss erfolgt.

Ein derartiger deutlicher Unterschied in der Dämpfung des Türflügels je nachdem, ob die Dämpfung über den Bremsstromkreis oder den Notbremsstromkreis erfolgt, weist zudem den Vorteil auf, dass das Vorliegen einer Fehlfunktion des Bremsstromkreises auch ohne gesonderte Anzeigemittel schon anhand der veränderten Dämpfung des Türflügels erkannt werden kann. Insbesondere wenn der Türflügel besonders stark gedämpft wird und/oder schon vor der Schließstellung des Türflügels zum Stillstand kommt, kann das ein Zeichen dafür sein, dass der Notbremsstromkreis aktiv ist und der Bremsstromkreis eine Fehlfunktion aufweist. Ein Nutzer des Türflügels kann dann z.B. eine Reparatur der Bremsvorrichtung veranlassen.

Um zu erfassen, ob eine Fehlfunktion des Bremsstromkreises vorliegt, können verschiedene Kriterien herangezogen werden. Gemäß einer vorteilhaften Ausführungsform sind die genannten Mittel dazu ausgebildet, die Geschwindigkeit des Türflügels zu erfassen und das Vorliegen einer Fehlfunktion des Bremsstromkreises anhand der Geschwindigkeit des Türflügels zu erfassen. Denn solange der Bremsstromkreis seine Funktion erfüllt, wird die Bewegung des Türflügels über den Bremsstromkreis gedämpft, insbesondere derart, dass der Türflügel bei aktiver Dämpfung über den Bremsstromkreis keine hohen Geschwindigkeiten erreichen kann. Liegt eine solche hohe Geschwindigkeit dennoch vor, kann daran eine Fehlfunktion des Bremsstromkreises erkannt und der Notbremsstromkreis aktiviert werden.

Insbesondere kann eine Maximalgeschwindigkeit vorgegeben oder vorgebbar sein, mit der die erfasste Geschwindigkeit des Türflügels verglichen werden kann, wobei die Maximalgeschwindigkeit dann vorzugsweise so gewählt ist, dass sie bei funktionierendem Bremsstromkreis nicht überschritten wird. Wenn dann dennoch eine Geschwindigkeit erfasst wird, die über der Maximalgeschwindigkeit liegt, liegt folglich eine Fehlfunktion des Bremsstromkreises vor.

Die Geschwindigkeit des Türflügels kann beispielsweise durch einen eigens dafür vorgesehenen Sensor erfassbar. Ein solcher Sensor ist jedoch nicht zwingend erforderlich. Denn die Geschwindigkeit kann auch anhand der von dem generatorisch betriebenen Elektromotor ausgegebenen Motorspannung erfasst werden. Die Bremsvorrichtung kann dann Mittel umfassen, welche die Motorklemmen in Abhängigkeit von der jeweiligen Motorspannung über den Notbremsstromkreis kurzschließen.

An diesem Beispiel ist zu erkennen, dass das erfindungsgemäße Erfassen des Vorliegens einer Fehlfunktion des Bremsstromkreises kein von dem in Reaktion auf eine Fehlfunktion erfolgenden Kurzschließen separater Schritt sein muss. Ebenso wenig braucht die Bremsvorrichtung dazu ausgebildet zu sein, das Ergebnis dieses Erfassens - nämlich ob eine Fehlfunktion vorliegt oder nicht - in irgendeiner Weise zwischenzuspeichern, zu signalisieren oder auszugeben. Vielmehr kann das genannte Erfassen sich darauf beschränken, dass ein Kennzeichen für das Vorliegen einer Fehlfunktion des Bremsstromkreises als Kriterium dafür herangezogen wird, die Motorklemmen über den Notbremsstromkreis kurzzuschließen.

Alternativ, vorzugsweise zusätzlich, zu einem Erfassen der Geschwindigkeit des Türflügels kann gemäß einer weiteren vorteilhaften Ausführungsform vorgesehen sein, dass die genannten Mittel dazu ausgebildet sind, die Stromstärke im Bremsstromkreis zu erfassen und das Vorliegen einer Fehlfunktion des Bremsstromkreises anhand der Stromstärke im Bremsstromkreis zu erfassen. Mit anderen Worten wird anstelle oder ergänzend zu der Geschwindigkeit des Türflügels die Stromstärke im Bremsstromkreis als Kriterium für ein Kurzschließen der Motorklemmen über den Notbremsstromkreis herangezogen. Insbesondere wenn der Bremsstromkreis dazu ausgebildet ist, die Motorklemmen pulsweitenmoduliert kurzzuschließen, kann die erfasste Stromstärke auch eine zeitlich gemittelte Stromstärke sein.

Auf diese Weise kann schon früher als bei bloßer Berücksichtigung der Geschwindigkeit des Türflügels eine Fehlfunktion des Bremsstromkreises erkannt werden. Denn bei funktionierender Dämpfung über den Bremsstromkreis, werden die Motorklemmen über den Bremsstromkreis kurzgeschlossen, so dass bei einer gewissen Geschwindigkeit des Türflügels, die zu einer entsprechenden Motorspannung an den Motorklemmen führt, eine gewisse Stromstärke im Bremsstromkreis zu erwarten ist. Diese zu erwartende Stromstärke im Bremsstromkreis ist folglich von der jeweiligen Geschwindigkeit des Türflügels abhängig. Wenn die Stromstärke von der zu erwartenden Stromstärke abweicht, insbesondere die zu erwartende Stromstärke unterschreitet, kann dies ein klarer Hinweis auf eine Fehlfunktion des Bremsstromkreises sein. Eine solche Diskrepanz zwischen der Geschwindigkeit des Türflügels und der Stromstärke im Bremsstromkreis kann auch schon bei geringen Geschwindigkeiten vorliegen und erfassbar sein. Somit braucht der Türflügel bei dieser Ausführungsform vorteilhafterweise nicht erst eine Maximalgeschwindigkeit zu überschreiten, bevor das Vorliegen einer Fehlfunktion des Bremsstromkreises erfasst werden und ein Kurzschluss über den Notbremsstromkreis ausgelöst werden kann.

Insbesondere kann ein Ausfall des Bremsstromkreises daran zu erkennen sein, dass die Stromstärke im Bremsstromkreis null beträgt, obwohl der Türflügel eine von null verschiedene Geschwindigkeit in einer von der Bremsvorrichtung zu dämpfenden Bewegungsrichtung aufweist. Denn zwar fließt im Bremsstromkreis bei Stillstand des Türflügels kein Strom, da der als Generator betriebene Elektromotor dann keine Spannung erzeugt. Und auch wenn sich der Türflügel in eine nicht zu dämpfende Bewegungsrichtung bewegt - z.B. wenn die Bremsvorrichtung dazu ausgebildet ist, lediglich das Schließen des Türflügels zu dämpfen, und der Türflügel geöffnet wird -, kann es sein, dass im Bremsstromkreis kein Strom fließt. Wenn sich aber der Türflügel in eine zu dämpfende Bewegungsrichtung bewegt, ist zu erwarten, dass zum Dämpfen der Bewegung durch Kurzschließen der Motorklemmen Strom über den Bremsstromkreis fließt. Wird dann dennoch eine Stromstärke im Bremsstromkreis von null erfasst, kann dies somit ein deutliches Zeichen für eine Fehlfunktion des Bremsstromkreises sein.

Gemäß einer bevorzugten Ausführungsform sind die genannten Mittel in den Notbremsstromkreis integriert, so dass der Notbremsstromkreis selbst dazu ausgebildet ist, infolge des Vorliegens einer Fehlfunktion des Bremsstromkreises die Motorklemmen automatisch kurzzuschließen. Mit anderen Worten braucht keine von dem Notbremsstromkreis gesonderte Einrichtung vorgesehen zu werden, die erfasst, ob eine Fehlfunktion des Bremsstromkreises vorliegt, und die gegebenenfalls den Notbremsstromkreis dazu ansteuert, die Motorklemmen kurzzuschließen. Vielmehr kann der Notbremsstromkreis selbst ein oder mehrere Elemente umfassen, über die ein Kurzschluss der Motorklemmen über den Notbremsstromkreis in Abhängigkeit von dem Vorliegen einer Fehlfunktion des Bremsstromkreises ausgelöst werden kann. Dazu kann ein solches Element des Notbremsstromkreises grundsätzlich auch mit dem Bremsstromkreis querverbunden sein, um etwa eine Stromstärke im Bremsstromkreis zu messen und den Notbremsstromkreis in Abhängigkeit von der Stromstärke zu schalten. Aber auch wenn eine solche Querverbindung vorliegt, sind der Bremsstromkreis und der Notbremsstromkreis bevorzugt als voneinander separate Stromkreise ausgebildet, so dass insbesondere ein über dem Bremsstromkreis erfolgender Kurzschluss der Motorklemmen nicht auch durch den Notbremsstromkreis verläuft und umgekehrt.

Gemäß einer vorteilhaften Ausführungsform ist der Notbremsstromkreis nach Art einer Klemmschaltung für Überspannungsschutz ausgebildet. Eine solche Klemmschaltung, die auch Crowbar genannt wird, kann im Rahmen eines Überspannungsschutzes dazu dienen, bei Überschreiten einer gewissen Spannung Strom abzuführen und beispielsweise durch eine Sicherung zu leiten, damit diese auslöst und die Stromversorgung unterbricht. Dieses Grundprinzip kann auch für den Notbremsstromkreis genutzt werden. Insofern ist der Notbremsstromkreis dann als Ganzes dazu ausgebildet, das Vorliegen einer Fehlfunktion des Bremsstromkreises zu erfassen, nämlich anhand der auch an dem Notbremsstromkreis anliegenden Motorspannung, und in Reaktion auf das Vorliegen einer Fehlfunktion die Motorklemmen kurzzuschließen. Da das Vorliegen einer Fehlfunktion des Bremsstromkreises dabei anhand der Motorspannung erfasst wird, ist es bei einer solchen Ausführungsform nicht erforderlich, dass der Notbremsstromkreis mit dem Bremsstromkreis querverbunden ist, um darüber zu erfassen, ob im Bremsstromkreis eine Fehlfunktion vorliegt.

Insbesondere wenn der Notbremsstromkreis derartig ohne Querverbindung zum Bremsstromkreis ausgebildet ist, kann er einfach parallel zu dem Bremsstromkreis an die Motorklemmen angeschlossen werden. Das erfordert vorteilhafterweise weder eine Modifikation des Bremsstromkreises, noch wird dessen Funktion dadurch beeinträchtigt. Das erleichtert auch ein Nachrüsten eines Notbremsstromkreises, um einer Bremsvorrichtung eine verbesserte Sicherheit zu verschaffen. Wenn der Bremsstromkreis dann ausfällt und infolgedessen die Motorspannung übermäßig ansteigt, schaltet sich der Notbremsstromkreis sozusagen automatisch zu und schließt die Motorklemmen kurz, so dass trotz des Ausfalls des Bremsstromkreises noch eine zumindest einfache, aber effektive Dämpfung über den Notbremsstromkreis erfolgt.

Gemäß einer bevorzugten Weiterbildung umfasst der Notbremsstromkreis einen Thyristor, über den die Motorklemmen kurzschließbar sind. Ein Thyristor eignet sich speziell im Rahmen einer Klemmschaltung besonders gut als Schaltelement für ein von einer Spannung, insbesondere von der Motorspannung, oder auch von einer Stromstärke abhängiges Kurzschließen der Motorklemmen. Das liegt insbesondere daran, dass ein Thyristor, nachdem er einmal gezündet, d.h. leitfähig geschaltet, wurde, leitfähig bleibt, solange noch ein signifikanter Strom durch den Thyristor fließt, auch wenn am Gate schon kein Strom mehr fließt. Auf diese Weise kann der Kurzschluss aufrechterhalten werden, auch wenn die den Kurzschluss auslösende Spannung oder der den Kurzschluss auslösende Strom z.B. gerade aufgrund des Kurzschlusses und der daraus resultierenden Dämpfung einbricht oder zumindest nachlässt. Somit kann mittels eines Notbremsstromkreises mit Thyristor insbesondere eine kontinuierlich starke Dämpfung des Türflügels, insbesondere bis zu dessen Stillstand, erreicht werden.

Vorzugsweise umfasst ein solcher Notbremsstromkreis ferner eine Zener-Diode, die in einem zur Anoden-Kathoden-Strecke des Thyristors parallelen Zweig des Notbremsstromkreises angeordnet ist, wobei der parallele Zweig mit dem Gate des Thyristors querverbunden ist. Dabei ist die Zener-Diode bevorzugt zwischen der Anode und dem Gate des Thyristors mit zu dem Thyristor antiparalleler Durchlassrichtung angeordnet. Die Zener-Diode kann in einer solchen Anordnung dazu dienen, die Spannung einzustellen, bei der der Thyristor zündet. Durch eine variable oder austauschbare Zener-Diode kann der Notbremsstromkreis somit auch unterschiedlich empfindlich einstellbar sein.

Des Weiteren ist es bevorzugt, wenn in dem parallelen Zweig zumindest ein Widerstand in Reihe mit der Zener-Diode angeordnet ist. Dies ermöglicht es, einen definierten Spannungsabfall zwischen der Zener-Diode und dem Widerstand zu erzielen. Gemäß einer vorteilhaften Weitebildung ist zudem parallel zu dem Widerstand ein Kondensator angeordnet. Dadurch können über den Kondensator Spannungsspitzen ausgefiltert werden, die nicht zwangsläufig auf einer tatsächlichen Fehlfunktion des Bremsstromkreises beruhen, sondern durch Störungen erzeugt werden können. Das Filtern verhindert dann, dass solche Spannungsspitzen zu einem Zünden des Thyristors führen.

Gemäß einer weiteren vorteilhaften Ausführungsform eines Notbremsstromkreises mit Thyristor sowie einem zu dem Thyristor parallelen Zweig mit Zener-Diode ist vorgesehen, dass in dem parallelen Zweig, insbesondere zwischen der Zener-Diode und einem in Reihe mit der Zener-Diode angeordneten Widerstand, ein Spannungsabgriff erfolgt, der mit dem Gate des Thyristors verbunden ist. Über diese Verbindung zwischen dem parallelen Zweig und dem Gate des Thyristors kann der Thyristor dann gezündet werden. Denn wenn die an der Zener-Diode anliegende Spannung die Durchbruchspannung der Zener-Diode überschreitet, kann Strom durch die Zener-Diode und über die Querverbindung vom Spannungsabgriff zum Gate des Thyristors fließen, so dass der Thyristor gezündet wird und infolgedessen auch ein direkter Stromfluss durch den Thyristor, nämlich entlang dessen Anoden-Kathoden-Strecke erfolgen kann, was dann zu einem vorteilhafterweise niederohmigen Kurzschluss der Motorklemmen über den Thyristor führen kann.

Vorzugweise ist dabei zwischen der Zener-Diode und dem Spannungsabgriff und/oder zwischen dem Spannungsabgriff und dem Gate des Thyristors ein weiterer Widerstand angeordnet. Durch weitere Widerstände kann die Spannungsteilung im parallelen Zweig bzw. der durch den parallelen Zweig zu dem Gate des Thyristors fließende Strom eingestellt werden, um eine gewünschte Auslöse- und Dämpfungscharakteristik des Notbremsstromkreises zu erzielen.

Des Weiteren kann es bei einem Notbremsstromkreis mit Thyristor vorteilhaft sein, wenn der Notbremsstromkreis eine Diode umfasst, die derart angeordnet ist, dass sie ein Kurzschließen der Motorklemmen sperrt, wenn eine entgegen der Durchlassrichtung des Thyristors gepolte Motorspannung an dem Notbremsstromkreis anliegt. Eine solche Ausführungsform ist insbesondere dann zweckmäßig, wenn ein zu dem Thyristor paralleler Zweig vorgesehen ist, durch den ansonsten ungehindert Strom fließen könnte. Wenn in einem solchen parallelen Zweig eine Zener-Diode angeordnet ist, sperrt diese zwar einen entgegen ihrer Durchlassrichtung anliegenden Strom, bis ihre Durchbruchspannung erreicht wird. In die Durchlassrichtung ist sie aber stets leitend. Da die Zener-Diode vorteilhafterweise antiparallel zum Thyristor angeordnet wird, also mit entgegengesetzten Durchlassrichtungen, würde sie einen Strom durch den parallelen Zweig, der durch eine entgegen der Durchlassrichtung des Thyristors gepolte Motorspannung verursacht wird, somit nicht sperren. Bei umgekehrter Polung der Motorspannung könnte also ein Kurzschluss über den parallelen Zweig erfolgen. Um zu verhindern, dass durch einen solchen Kurzschluss eine Dämpfung des Türflügels über den Notbremsstromkreis auch in eine Bewegungsrichtung erfolgt, die eigentlich ungedämpft sein sollte, kann die genannte Diode vorgesehen werden.

Die Bezeichnung als Diode ist in diesem Kontext vor allem funktional zu verstehen und umfasst somit allgemein Bauteile oder auch Anordnungen von Bauteilen, die einen Stromfluss in eine Durchlassrichtung zulassen und entgegen der Durchlassrichtung sperren.

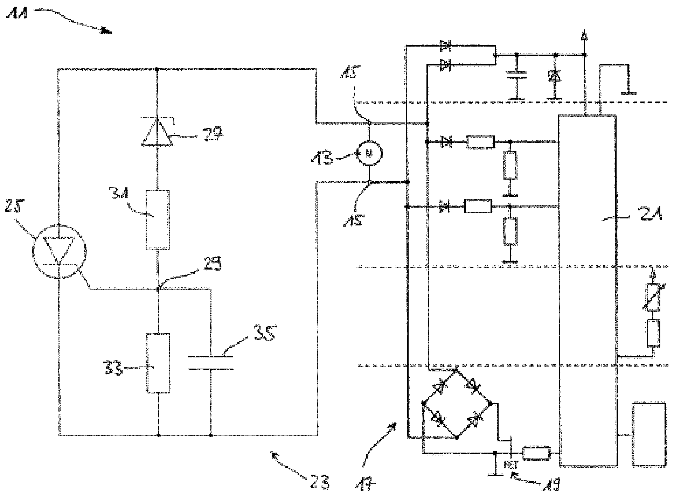

Die Erfindung wird nachfolgend lediglich beispielhaft anhand der Figur weiter erläutert.

Die Figur zeigt eine Bremsvorrichtung 11 für einen nicht dargestellten Türflügel, wobei die Bremsvorrichtung 11 insbesondere als Teil eines Türschließers oder eines Türantriebs für den Türflügel ausgebildet sein kann. In der Figur ist die Bremsvorrichtung 11 schematisch nach Art eines Schaltbildes dargestellt.

Die Bremsvorrichtung 11 umfasst einen Elektromotor 13 mit einer Motorwelle, die antriebswirksam mit dem Türflügel gekoppelt ist, so dass eine Bewegung des Türflügels zu einer Drehung der Motorwelle führt. Umgekehrt kann eine Drehung der Motorwelle zu einer Bewegung des Türflügels führen, so dass der Elektromotor 13 als Motor eines Türantriebs genutzt werden kann. Eine wesentliche Eigenschaft des Elektromotors 13 ist allerdings, dass er generatorisch betreibbar ist. Wenn der Türflügel nicht über den Elektromotor 13 angetrieben wird, aber dennoch bewegt wird, und sich infolgedessen auch die Motorwelle dreht, entsteht daher an Motorklemmen 15 des Elektromotors 13 eine Motorspannung.

Die Bremsvorrichtung 11 umfasst einen Bremsstromkreis 17, der über die Motorklemmen 15 an den Elektromotor 13 angeschlossen ist, so dass die jeweilige Motorspannung an dem Bremsstromkreis 17 anliegt. Der Bremsstromkreis 17 ist bei der in der Figur gezeigten exemplarischen Ausführungsform wie in DE 10 2015 200 284 B3 beschrieben ausgebildet. Insbesondere umfasst der Bremsstromkreis 17 ein Schaltelement 19 in Form eines Feldeffekttransistors (FET), das mittels einer Steuereinheit 21, beispielsweise pulsweitenmoduliert, schaltbar ist. Je nach Schaltzustand des Schaltelements 19 werden die Motorklemmen 15 über den Bremsstromkreis 17, insbesondere über das Schaltelement 19 in dem Bremsstromkreis 17, kurzgeschlossen.

Durch einen solchen Kurzschluss der Motorklemmen 15 wird eine Last an den Elektromotor 13 angelegt, durch welche die Drehung der Motorwelle und somit die Bewegung des Türflügels gebremst werden. Somit führt der Bremsstromkreis 17 zu einer Dämpfung der Bewegung des Türflügels. Insbesondere durch variable Pulsweitenmodulation des Schaltzustands des Schaltelements 19 kann die jeweilige Dämpfung speziell an jeweilige Anforderungen angepasst oder anpassbar sein.

Bei der erfindungsgemäßen Bremsvorrichtung 11 ist parallel zu dem Bremsstromkreis 17 ein zusätzlicher und separat von dem Bremsstromkreis 17 ausgebildeter Notbremsstromkreis 23 vorgesehen, der wie der Bremsstromkreis 17 über die Motorklemmen 15 an den Elektromotor 13 angeschlossen ist. Somit liegt die von dem Elektromotor 13 generatorisch erzeugte jeweilige Motorspannung auch an dem Notbremsstromkreis 23 an.

Im Normalfall, d.h. wenn keine Fehlfunktion des Bremsstromkreises 17 vorliegt, ist der Notbremsstromkreis 23 gesperrt, so dass die Motorklemmen 15 dann nicht über den Notbremsstromkreis 23 kurzgeschlossen sind. Insofern wird die Funktion des Bremsstromkreises 17 durch den Notbremsstromkreis 23 nicht beeinflusst.

Die Sperrung eines Stromflusses durch den Notbremsstromkreis 23 ist dadurch bedingt, dass in den beiden parallelen Zweigen des Notbremsstromkreises 23 jeweils ein sperrendes Element angeordnet ist. In dem einen Zweig ist ein Thyristor 25 angeordnet, der zwar bezüglich der Polung der Motorspannung bei einer Bewegung des Türflügels in die grundsätzlich zu dämpfende Bewegungsrichtung in Durchlassrichtung ausgerichtet ist, der aber erst dadurch leitend geschaltet, also gezündet wird, dass ein Strom am Gate des Thyristors 25 fließt, was bei Normalbetrieb nicht der Fall ist. In dem parallelen Zweig ist eine Zener-Diode 27 in Sperrrichtung angeordnet, die dadurch bei Normalbetrieb einen Stromfluss in diesem Zweig sperrt.

Wenn die Motorspannung allerdings über die Durchbruchspannung der Zener-Diode 27 steigt, wird diese auch in Sperrrichtung leitend. Infolgedessen liegt über die Verbindung des Spannungsabgriffs 29 mit dem Gate des Thyristors 25 eine Spannung zwischen dem Gate und der Kathode des Thyristors 25 an, so dass am Gate des Thyristors 25 ein Strom fließt. Das hat dann zur Folge, dass der Thyristor 25 zündet und somit der gesamte den Thyristor 25 aufweisende Zweig des Notbremsstromkreises 23 niederohmig leitend wird, wodurch die Motorklemmen 15 über den Notbremsstromkreis 23 kurzgeschlossen werden.

In dem Zweig des Notbremsstromkreises 23, der die Zener-Diode 27 aufweist, sind in Reihe mit der Zener-Diode 27 zwei Widerstände 31, 33 angeordnet, zwischen denen der Spannungsabgriff 29 liegt. Zudem ist parallel zu dem von der Zener-Diode 27 weiter entfernten Widerstand 33 ein Kondensator 35 vorgesehen. Durch diese Anordnung des Kondensators 35 wird ein passives Tiefpassfilter gebildet, von dem kurzzeitige Spannungspulse ausgefiltert werden können. Dadurch kann vorteilhafterweise sichergestellt werden, dass einzelne Spannungsspitzen, die nicht tatsächlich durch eine Fehlfunktion des Bremsstromkreises 17 bedingt sind, sondern eher zufällig oder durch vorübergehende Effekte, nicht zu einem Auslösen eines Kurzschlusses über den Notbremsstromkreis 23 führen.

Die Zener-Diode 27 sowie die zwei Widerstände 31, 33 sind dabei so ausgelegt, dass der Thyristor 25 nur dann zündet, wenn die Motorspannung eine Maximalspannung erreicht bzw. überschreitet. Diese Maximalspannung entspricht einer Geschwindigkeit des Türflügels, die so hoch ist, dass sie bei funktionierendem Bremsstromkreis 17 nicht erreicht würde. Das Überschreiten der Maximalspannung kann daher als Kennzeichen für einen Ausfall der Dämpfung über den Bremsstromkreis 17 gewertet werden, woraufhin automatisch als direkte Folge der hohen Motorspannung der Thyristor 25 gezündet wird. Insofern ist der Notbremsstromkreis 23 dazu ausgebildet, das Vorliegen einer Fehlfunktion des Bremsstromkreises 17 zu erfassen und die Motorklemmen 15 bei Vorliegen einer Fehlfunktion des Bremsstromkreises 17 automatisch kurzzuschließen.

Der direkte Kurzschluss über den Thyristor 25, der auch bei nachlassender Motorspannung aufrechterhalten bleibt, bewirkt dann eine starke Dämpfung der Bewegung des Türflügels. Insbesondere ist diese Dämpfung über den Notbremsstromkreis 23 wesentlich stärker, als es eine von dem funktionierenden Bremsstromkreis 17 bewirkte Dämpfung wäre, bei welcher der Kurzschluss vorteilhafterweise pulsweitenmoduliert und auf ein gewünschtes Schließverhalten des Türflügels hin ausgelegt ist. Die Dämpfung über den Notbremsstromkreis 23 kann z.B. so stark sein, dass der sich schließende Türflügel bis zum Stillstand gebremst wird, noch bevor er vollständig geschlossen ist. Zumindest aber kann die Schließzeit des Türflügels bei Dämpfung über den Notbremsstromkreis 23 im Vergleich zur Schließzeit bei einer Dämpfung über den Bremsstromkreis 17 erheblich verlängert sein.

An dem veränderten Schließverhalten des Türflügels kann ein Nutzer dann erkennen, dass die Dämpfung nicht mehr über den Bremsstromkreis 17, sondern über den Notbremsstromkreis 23 erfolgt und dass folglich eine Fehlfunktion des Bremsstromkreises 17 vorliegen muss. Der Nutzer kann dann eine Reparatur der Bremsvorrichtung 11 veranlassen. Bis diese Reparatur erfolgt ist, schlägt der Türflügel jedoch nicht einfach ungedämpft zu, sondern wird aufgrund der erfindungsgemäßen Ausbildung der Bremsvorrichtung 11 ersatzweise über den Notbremsstromkreis 23 gedämpft. Dadurch ist die Zuverlässigkeit und Sicherheit der Bremsvorrichtung 11 verbessert, ohne dass die Vorteile der Dämpfung über den Bremsstromkreis 17 im Normalbetrieb beeinträchtigt würden.

### Bezugszeichen

- 11: Bremsvorrichtung
- 13: Elektromotor
- 15: Motorklemme
- 17: Bremsstromkreis
- 19: Schaltelement
- 21: Steuereinheit
- 23: Notbremsstromkreis
- 25: Thyristor
- 27: Zener-Diode
- 29: Spannungsabgriff
- 31: Widerstand
- 33: Widerstand
- 35: Kondensator

## Patentansprüche

1. Bremsvorrichtung (11) für einen beweglichen Türflügel,
die einen als Generator betriebenen Elektromotor (13) umfasst, dessen Motorwelle durch eine Bewegung des Türflügels drehbar ist und an dessen Motorklemmen (15) eine bewegungsabhängige Motorspannung entsteht, und die einen Bremsstromkreis (17) umfasst, an den die Motorspannung angelegt ist und über den die Motorklemmen (15) kurzschließbar sind, um eine Bewegung des Türflügels zu dämpfen,
**dadurch gekennzeichnet,**
**dass** die Bremsvorrichtung (11) zusätzlich einen Notbremsstromkreis (23) umfasst, an den die Motorspannung angelegt ist und über den die Motorklemmen (15) kurzschließbar sind, um eine Bewegung des Türflügels zu dämpfen,
wobei Mittel vorgesehen sind, die dazu ausgebildet sind, das Vorliegen einer Fehlfunktion des Bremsstromkreises (17) zu erfassen und die Motorklemmen (15) bei Vorliegen einer Fehlfunktion des Bremsstromkreises (17) über den Notbremsstromkreis (23) kurzzuschließen.

2. Bremsvorrichtung nach Anspruch 1,
**dadurch gekennzeichnet,**
**dass** die genannten Mittel dazu ausgebildet sind, die Motorklemmen (15) bei Vorliegen einer Fehlfunktion des Bremsstromkreises (17) über den Notbremsstromkreis (23) kontinuierlich kurzzuschließen, um die Bewegung des Türflügels vorzugsweise konstant, insbesondere bis zum Stillstand des Türflügels, zu dämpfen.

3. Bremsvorrichtung nach Anspruch 1 oder 2,
**dadurch gekennzeichnet,**
**dass** die genannten Mittel dazu ausgebildet sind, die Geschwindigkeit des Türflügels zu erfassen und das Vorliegen einer Fehlfunktion des Bremsstromkreises (17) anhand der Geschwindigkeit des Türflügels, insbesondere anhand des Überschreitens einer Maximalgeschwindigkeit, zu erfassen.

4. Bremsvorrichtung nach zumindest einem der vorstehenden Ansprüche,
**dadurch gekennzeichnet,**
**dass** die genannten Mittel dazu ausgebildet sind, die Stromstärke im Bremsstromkreis (17) zu erfassen und das Vorliegen einer Fehlfunktion des Bremsstromkreises (17) anhand der Stromstärke im Bremsstromkreis (17), insbesondere anhand des Unterschreitens einer zu erwartenden Stromstärke, zu erfassen.

5. Bremsvorrichtung nach zumindest einem der vorstehenden Ansprüche,
**dadurch gekennzeichnet,**
**dass** die genannten Mittel in den Notbremsstromkreis (23) integriert sind, so dass der Notbremsstromkreis (23) dazu ausgebildet ist, infolge des Vorliegens einer Fehlfunktion des Bremsstromkreises (17) die Motorklemmen (15) automatisch kurzzuschließen.

6. Bremsvorrichtung nach zumindest einem der vorstehenden Ansprüche,
**dadurch gekennzeichnet,**
**dass** der Notbremsstromkreis (23) nach Art einer Klemmschaltung für Überspannungsschutz ausgebildet ist.

7. Bremsvorrichtung nach zumindest einem der vorstehenden Ansprüche,
**dadurch gekennzeichnet,**
**dass** der Notbremsstromkreis (23) einen Thyristor (25) umfasst, über den die Motorklemmen (15) kurzschließbar sind.

8. Bremsvorrichtung nach Anspruch 7,
**dadurch gekennzeichnet,**
**dass** der Notbremsstromkreis (23) eine Zener-Diode (27) umfasst, die in einem zur Anoden-Kathoden-Strecke des Thyristors (25) parallelen Zweig des Notbremsstromkreises (23) angeordnet ist, wobei der parallele Zweig mit dem Gate des Thyristors (25) querverbunden ist.

9. Bremsvorrichtung nach Anspruch 8,
**dadurch gekennzeichnet,**
**dass** in dem parallelen Zweig ein Widerstand (31, 33) in Reihe mit der Zener-Diode (27) angeordnet ist.

10. Bremsvorrichtung nach Anspruch 9,
**dadurch gekennzeichnet,**
**dass** parallel zu dem Widerstand (33) ein Kondensator (35) angeordnet ist.

11. Bremsvorrichtung nach zumindest einem der Ansprüche 8 bis 10
**dadurch gekennzeichnet,**
**dass** in dem parallelen Zweig, insbesondere zwischen der Zener-Diode (27) und einem in Reihe mit der Zener-Diode (27) angeordneten Widerstand (33), ein Spannungsabgriff (29) erfolgt, der mit dem Gate des Thyristors (25) verbunden ist.

12. Bremsvorrichtung nach Anspruch 11,
**dadurch gekennzeichnet,**
**dass** zwischen der Zener-Diode (27) und dem Spannungsabgriff (29) und/oder zwischen dem Spannungsabgriff (29) und dem Gate des Thyristors (25) ein weiterer Widerstand angeordnet ist.

13. Bremsvorrichtung nach zumindest einem der Ansprüche 7 bis 12,
**dadurch gekennzeichnet,**
**dass** der Notbremsstromkreis (23) eine Diode umfasst, die derart angeordnet ist, dass sie ein Kurzschließen der Motorklemmen (15) sperrt, wenn eine entgegen der Durchlassrichtung des Thyristors (25) gepolte Motorspannung an dem Notbremsstromkreis (23) anliegt.

## Claims

1. Braking device (11) for a movable door leaf comprising an electric motor (13) which is operated as a generator and the motor shaft of which can be rotated by a movement of the door leaf and on the motor terminals (15) of which a movement-dependent motor voltage is produced, and comprising a braking circuit (17), to which the motor voltage is applied and via which the motor terminals (15) can be short-circuited to dampen movement of the door leaf, **characterized in that**
the braking device (11) additionally comprises an emergency braking circuit (23), to which the motor voltage is applied and via which the motor terminals (15) can be short-circuited to dampen movement of the door leaf,
wherein means which are designed to detect the presence of a malfunction of the braking circuit (17) and to short-circuit the motor terminals (15) via the emergency braking circuit (23) in the presence of a malfunction of the braking circuit (17) are provided.

2. Braking device according to Claim 1,
**characterized**
**in that** the said means are designed to short-circuit the motor terminals (15) continuously via the emergency braking circuit (23) in the presence of a malfunction of the braking circuit (17) to dampen the movement of the door leaf, preferably constantly, in particular until the door leaf comes to a standstill.

3. Braking device according to Claim 1 or 2,
**characterized**
**in that** the said means are designed to detect the speed of the door leaf and to detect the presence of a malfunction of the braking circuit (17) on the basis of the speed of the door leaf, in particular on the basis of the speed of the door leaf exceeding a maximum speed.

4. Braking device according to at least one of the preceding claims,
**characterized**
**in that** the said means are designed to detect the current intensity in the braking circuit (17) and to detect the presence of a malfunction of the braking circuit (17) on the basis of the current intensity in the braking circuit (17), in particular on the basis of the current intensity not achieving a current intensity to be expected.

5. Braking device according to at least one of the preceding claims,
**characterized**
**in that** the said means are integrated in the emergency braking circuit (23) such that the emergency braking circuit (23) is designed to short-circuit the motor terminals (15) automatically as a result of the presence of a malfunction of the braking circuit (17) .

6. Braking device according to at least one of the preceding claims,
**characterized**
**in that** the emergency braking circuit (23) is designed in the manner of a clamping circuit for overvoltage protection.

7. Braking device according to at least one of the preceding claims,
**characterized**
**in that** the emergency braking circuit (23) comprises a thyristor (25), via which the motor terminals (15) can be short-circuited.

8. Braking device according to Claim 7,
**characterized**
**in that** the emergency braking circuit (23) comprises a Zener diode (27), which is arranged in a branch of the emergency braking circuit (23) parallel to an anode-cathode path of the thyristor (25), the parallel branch being cross-connected to a gate of the thyristor (25) .

9. Braking device according to Claim 8,
**characterized**
**in that** a resistor (31, 33) is arranged in series with the Zener diode (27) in the parallel branch.

10. Braking device according to Claim 9,
**characterized**
**in that** a capacitor (35) is arranged parallel to the resistor (33).

11. Braking device according to at least one of Claims 8 to 10,
**characterized**
**in that** a voltage tap (29), which is connected to the gate of the thyristor (25), is provided in the parallel branch, in particular between the Zener diode (27) and a resistor (33) arranged in series with the Zener diode (27).

12. Braking device according to Claim 11,
**characterized**
**in that** a further resistor is arranged between the Zener diode (27) and the voltage tap (29) and/or between the voltage tap (29) and the gate of the thyristor (25).

13. Braking device according to at least one of Claims 7 to 12,
**characterized**
**in that** the emergency braking circuit (23) comprises a diode which is arranged in such a way that it blocks short-circuiting of the motor terminals (15) when a motor voltage polarized in the opposite direction to the forward direction of the thyristor (25) is present at the emergency braking circuit (23).

## Revendications

1. Dispositif de freinage (11) pour un battant de porte mobile, comprenant un moteur électrique (13) fonctionnant en mode générateur, dont l'arbre moteur peut être mis en rotation par un mouvement du battant de porte et aux bornes de moteur (15) duquel une tension de moteur dépendant du mouvement apparaît, et qui comprend un circuit électrique de freinage (17) auquel est appliquée la tension de moteur et par lequel les bornes de moteur (15) peuvent être mises en court-circuit pour amortir le mouvement du battant de porte,
**caractérisé en ce que** le dispositif de freinage (11) comprend en outre un circuit électrique de freinage d'urgence (23) auquel est appliquée la tension de moteur et par lequel les bornes de moteur (15) peuvent être mises en court-circuit pour amortir un mouvement du battant de porte,
dans lequel des moyens sont prévus qui sont réalisés pour détecter la présence d'un dysfonctionnement du circuit électrique de freinage (17) et pour mettre en court-circuit les bornes de moteur (15) par l'intermédiaire du circuit électrique de freinage d'urgence (23) en cas de dysfonctionnement du circuit électrique de freinage (17).

2. Dispositif de freinage selon la revendication 1, **caractérisé en ce que** lesdits moyens sont réalisés pour mettre en court-circuit les bornes de moteur (15) en continu par l'intermédiaire du circuit électrique de freinage d'urgence (23) en cas de dysfonctionnement du circuit électrique de freinage (17), afin d'amortir le mouvement du battant de porte de préférence de manière constante, en particulier jusqu'à l'arrêt du battant de porte.

3. Dispositif de freinage selon la revendication 1 ou 2, **caractérisé en ce que** lesdits moyens sont réalisés pour détecter la vitesse du battant de porte et pour détecter la présence d'un dysfonctionnement du circuit électrique de freinage (17) à l'aide de la vitesse du battant de porte, en particulier à l'aide du dépassement d'une vitesse maximale.

4. Dispositif de freinage selon au moins l'une des revendications précédentes, **caractérisé en ce que** lesdits moyens sont réalisés pour détecter l'intensité de courant dans le circuit électrique de freinage (17) et pour détecter la présence d'un dysfonctionnement du circuit électrique de freinage (17) à l'aide de l'intensité de courant dans le circuit électrique de freinage (17), en particulier à l'aide du soupassement d'une intensité de courant attendue.

5. Dispositif de freinage selon au moins l'une des revendications précédentes, **caractérisé en ce que** lesdits moyens sont intégrés dans le circuit électrique de freinage d'urgence (23) de sorte que le circuit électrique de freinage d'urgence (23) est réalisé pour mettre automatiquement en court-circuit les bornes de moteur (15) suite à la présence d'un dysfonctionnement du circuit électrique de freinage (17).

6. Dispositif de freinage selon au moins l'une des revendications précédentes, **caractérisé en ce que** le circuit électrique de freinage d'urgence (23) est réalisé à la manière d'un circuit de blocage pour la protection contre les surtensions.

7. Dispositif de freinage selon au moins l'une des revendications précédentes, **caractérisé en ce que** le circuit électrique de freinage d'urgence (23) comprend un thyristor (25) qui permet de mettre en court-circuit les bornes de moteur (15).

8. Dispositif de freinage selon la revendication 7, **caractérisé en ce que** le circuit électrique de freinage d'urgence (23) comprend une diode Zener (27) qui est disposée dans une branche du circuit électrique de freinage d'urgence (23), parallèle à la distance anode-cathode du thyristor (25), dans lequel la branche parallèle est reliée transversalement à la grille du thyristor (25).

9. Dispositif de freinage selon la revendication 8, **caractérisé en ce que** dans la branche parallèle, une résistance (31, 33) est disposée en série avec la diode Zener (27).

10. Dispositif de freinage selon la revendication 9, **caractérisé en ce qu'**un condensateur (35) est disposé en parallèle à la résistance (33).

11. Dispositif de freinage selon au moins l'une des revendications 8 à 10, **caractérisé en ce que** dans la branche parallèle, en particulier entre la diode Zener (27) et une résistance (33) disposée en série avec la diode Zener (27), une prise de tension (29) est effectuée qui est reliée à la grille du thyristor (25).

12. Dispositif de freinage selon la revendication 11, **caractérisé en ce qu'**une autre résistance est disposée entre la diode Zener (27) et la prise de tension (29) et/ou entre la prise de tension (29) et la grille du thyristor (25).

13. Dispositif de freinage selon au moins l'une des revendications 7 à 12, **caractérisé en ce que** le circuit électrique de freinage d'urgence (23) comprend une diode qui est disposée de telle sorte qu'une mise en court-circuit bloque les bornes de moteur (15) lorsqu'une tension de moteur, polarisée à l'opposé du sens passant du thyristor (25), est appliquée au circuit électrique de freinage d'urgence (23),
